# EUROPEAN PATENT APPLICATION

(11) **EP 4 628 751 A1**
(43) Date of publication of application: **08.10.2025**
(21) Application number: 24213546.5
(22) Date of filing: 18.11.2024
(51) Int. Cl.: F16H 9/18, F16H 55/56, F16H 57/04, F16H 63/06

(54) **CONTINUOUSLY VARIABLE TRANSMISSION AND STRADDLED VEHICLE INCLUDING SAME**

(30) Priority: 04.04.2024 JP 2024061015
(71) Applicant: Yamaha Hatsudoki Kabushiki Kaisha, Iwata-shi, Shizuoka 438-8501 (JP)
(72) Inventor: FUJIKURA, Kyohei, Iwata-shi, 4388501 (JP); TANAKA, Ippei, Iwata-shi, 4388501 (JP)
(74) Representative: Studio Torta S.p.A.

(57) **Abstract**

The present invention relates to a continuously variable transmission (15) of an electronically controlled type; the continuously variable transmission (15) including a rotational shaft (22), a pair of bushings (63, 64), and a movable sheave (60); the pair of bushings (63, 64) being disposed to be slidable with respect to the rotational shaft (22) in the axial direction of the rotational shaft (22); the movable sheave (60) including a boss portion (60b) disposed on the outer peripheral surface of each of the pair of bushings (63, 64) and being moved in the axial direction with sliding of the pair of bushings (63, 64) in the axial direction; the pair of bushings (63, 64) being disposed on both ends of the inner peripheral surface of the boss portion (60b).

## Description

### Technical field

The present invention relates to a continuously variable transmission and a straddled vehicle including the same.

### Background

There has been conventionally known a continuously variable transmission that a belt is wound about a pair of pulleys. A continuously variable transmission described in Japan Laid-open Patent Application Publication No. 2014-152884 is of a centrifugal type that a movable sheave is disposed to be axially slidable and non-rotatable with respect to a rotational shaft. The movable sheave is axially moved when a bushing is axially slid with respect to the rotational shaft.

In the continuously variable transmission described in Japan Laid-open Patent Application Publication No. 2014-152884, an eccentric load acting on the movable sheave from the belt is received by weights. By contrast, in a continuously variable transmission of an electronically controlled type, the weights for receiving the eccentric load acting on the movable sheave from the belt are omitted. Because of this, enhancement in load endurance performance of the movable sheave has been demanded in the continuously variable transmission of the electronically controlled type.

It is an object of the present invention to achieve enhancement in load endurance performance of a movable sheave in a continuously variable transmission of an electronically controlled type.

### Description of the invention

A continuously variable transmission according to an aspect of the present invention is of an electronically controlled type. The continuously variable transmission includes a rotational shaft, a pair of bushings, and a movable sheave. The pair of bushings is disposed to be slidable with respect to the rotational shaft in an axial direction of the rotational shaft. The movable sheave includes a boss portion disposed on an outer peripheral surface of each of the pair of bushings and is moved in the axial direction with sliding of the pair of bushings in the axial direction. The pair of bushings is disposed on both ends of an inner peripheral surface of the boss portion.

In the continuously variable transmission according to the present aspect, an eccentric load, acting on the movable sheave from a belt of the continuously variable transmission, can be received by the pair of bushings disposed on both ends of the inner peripheral surface of the boss portion of the movable sheave; hence, enhancement in load endurance performance of the movable sheave can be achieved.

The movable sheave may include a spline groove disposed on the inner peripheral surface of the boss portion. The rotational shaft may include a spline tooth spline-fitted to the spline groove. The spline groove may be larger in dimension than the spline tooth in the axial direction. In this case, the spline groove is enabled to overlap with a sliding range of the pair of bushings on the rotational shaft in a radial direction of the rotational shaft; hence, increase in dimension of the rotational shaft can be inhibited in the axial direction.

The spline tooth of the rotational shaft may be integrated with the rotational shaft. In this case, spline fitting is stabilized between the spline tooth and the spline groove; besides, reduction in number of components is enabled.

A lubricant may be enclosed in between the pair of bushings. In this case, enhancement in abrasion resistant performance can be achieved for the pair of bushings, the rotational shaft, and the movable sheave.

The continuously variable transmission may further include a lubricant sump for enclosing the lubricant. The rotational shaft may include a first shaft portion and a second shaft portion disposed on an outer peripheral surface of the first shaft portion. The lubricant sump may include a first sump portion disposed between the outer peripheral surface of the first shaft portion and an inner peripheral surface of the second shaft portion, a second sump portion disposed between an outer peripheral surface of the second shaft portion and the inner peripheral surface of the boss portion, and a connecting hole that extends in a radial direction of the rotational shaft and connects the first and second sump portions therethrough to each other. In this case, the lubricant can be enclosed in as large a range as possible; besides, when the rotational shaft is rotated, the lubricant becomes likely to be led to the first sump portion from the second sump portion through the connecting hole. Hence, enhancement in abrasion resistant performance can be further achieved for the pair of bushings, the rotational shaft, and the movable sheave.

The second shaft portion may include a spline tooth spline-fitted to the inner peripheral surface of the boss portion. The connecting hole of the lubricant sump may be disposed in alignment with the spline tooth in a circumferential direction of the rotational shaft. In this case, increase in dimension of the rotational shaft can be inhibited in the axial direction.

The boss portion of the movable sheave may include a spline groove fitted to the spline tooth. The spline groove may be larger in dimension than the spline tooth in the axial direction. In this case, increase in dimension of the rotational shaft can be further inhibited in the axial direction.

A straddled vehicle according to another aspect of the present invention includes the continuously variable transmission configured as any of the above. In the straddled vehicle according to the present aspect, enhancement in load endurance performance of the movable sheave can be achieved.

Overall, according to the present invention, enhancement in load endurance performance of a movable sheave can be achieved in a continuously variable transmission of an electronically controlled type.

### Brief description of the drawings

FIG. 1 is a left side view of a straddled vehicle.
FIG. 2 is a cross-sectional top view of an engine unit.
FIG. 3 is an enlarged view of a primary pulley and a sheave drive mechanism.
FIG. 4 is an enlarged view of the primary pulley and the sheave drive mechanism.
FIG. 5 is an enlarged view of a part in FIG. 3.
FIG. 6 is a cross-sectional view of a second shaft portion taken along line A-A shown in FIG. 3.
FIG. 7 is an enlarged view of a secondary pulley and a centrifugal clutch.
FIG. 8 is an enlarged view of the secondary pulley and the centrifugal clutch.

### Embodiments of the invention

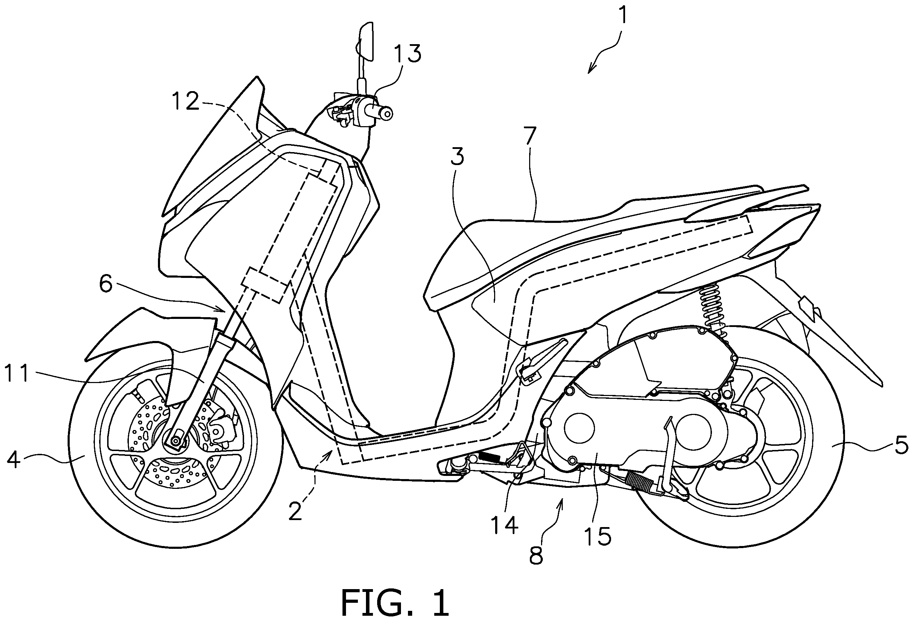

A straddled vehicle according to a preferred embodiment will be hereinafter explained with reference to drawings. FIG. 1 is a left side view of a straddled vehicle 1 according to the preferred embodiment. The straddled vehicle 1 according to the present preferred embodiment is a scooter. As shown in FIG. 1, the straddled vehicle 1 includes a vehicle body frame 2, a vehicle body cover 3, a front wheel 4, a rear wheel 5, a steering device 6, a seat 7, and an engine unit 8. It should be noted that in the present preferred embodiment, the terms "front", "rear", "right", and "left" are defined as referring to front, rear, right, and left directions seen from a rider seated on the seat 7.

The vehicle body cover 3 covers the vehicle body frame 2. The steering device 6 is supported by the vehicle body frame 2 so as to be turnable right and left. The steering device 6 includes a front fork 11, a steering shaft 12, and a handle member 13.

The front fork 11 supports the front wheel 4 such that the front wheel 4 is made rotatable. The steering shaft 12 is connected to the front fork 11. The steering shaft 12 is supported by the vehicle body frame 2 so as to be turnable right and left. The handle member 13 is connected to the steering shaft 12.

The seat 7 is disposed behind the handle member 13. The engine unit 8 is disposed below the seat 7. The engine unit 8 is supported by the vehicle body frame 2 so as to be pivotable up and down. The engine unit 8 supports the rear wheel 5 such that the rear wheel 5 is made rotatable. The engine unit 8 includes an engine 14 and a continuously variable transmission 15. The continuously variable transmission 15 is disposed on a lateral side of the engine 14. The continuously variable transmission 15 transmits a driving force, generated from the engine 14, to the rear wheel 5.

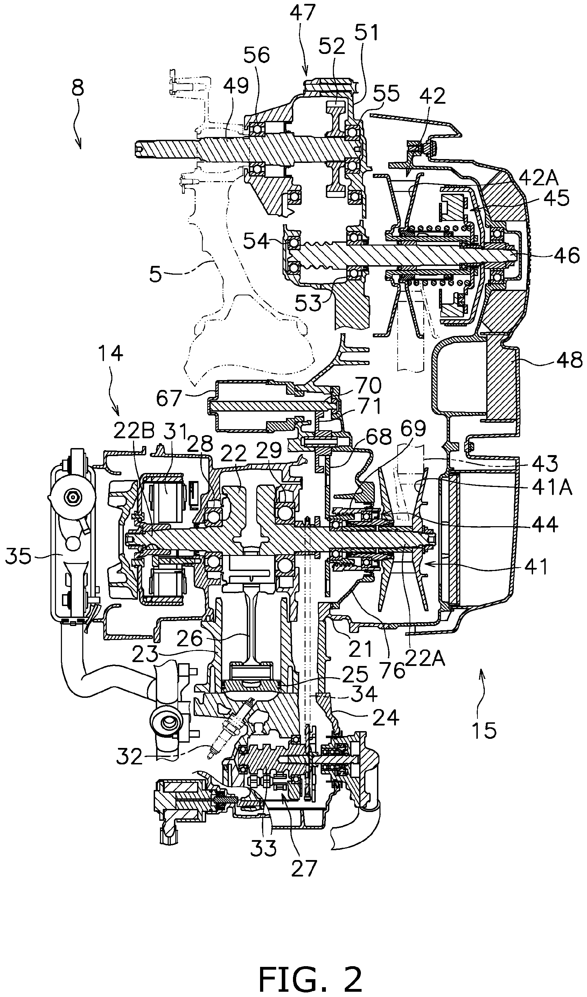

FIG. 2 is a cross-sectional top view of the engine unit 8. As shown in FIG. 2, the engine 14 includes a crankcase 21, a crankshaft 22 (exemplary rotational shaft), a cylinder body 23, a cylinder head 24, a piston 25, a connecting rod 26, and a valve actuating mechanism 27.

The crankshaft 22 is accommodated in the crankcase 21. The crankshaft 22 is rotatably supported by the crankcase 21 through bearings 28 and 29. The crankshaft 22 includes a first shaft end 22A and a second shaft end 22B. The continuously variable transmission 15 (exemplary continuously variable transmission) is connected to the first shaft end 22A. An electric power generator 31 is connected to the second shaft end 22B.

The cylinder body 23 is connected to the crankcase 21. The cylinder head 24 is connected to the cylinder body 23. The connecting rod 26 and the piston 25 are disposed inside the cylinder body 23. The piston 25 is connected to the crankshaft 22 through the connecting rod 26. An ignition device 32 is attached to the cylinder head 24. The valve actuating mechanism 27 includes a camshaft 33. A cam chain 34 is wound about the camshaft 33 and the crankshaft 22. The rotation of the crankshaft 22 is transmitted to the camshaft 33 through the cam chain 34, whereby the camshaft 33 is rotated. Accordingly, an intake valve and an exhaust valve of the engine 14 (both not shown in the drawings) are driven by the valve actuating mechanism 27.

The continuously variable transmission 15 is an electronically controlled transmission. In other words, the continuously variable transmission 15 is electrically controlled to change a gear ratio in accordance with a command signal transmitted thereto from a controller (not shown in the drawings).

As shown in FIG. 2, the continuously variable transmission 15 includes the crankshaft 22, a primary pulley 41, a secondary pulley 42, a belt 43, a sheave drive mechanism 44, a centrifugal clutch 45, an output shaft 46, a reducer 47, and a transmission case 48.

The primary pulley 41 is connected to the crankshaft 22. The primary pulley 41 includes a first groove 41A having a V shape. The secondary pulley 42 is connected to the rear wheel 5 through an axle 49. The secondary pulley 42 includes a second groove 42A having a V shape.

The belt 43 is wound about the primary pulley 41 and the secondary pulley 42. The belt 43 has a trapezoidal cross section fitted in shape to the first groove 41A and the second groove 42A. The secondary pulley 42 is connected to the output shaft 46 through the centrifugal clutch 45. The output shaft 46 is connected to the axle 49 through the reducer 47. The output shaft 46 is rotatably supported by a reducer case 51 (to be described) through bearings 53 and 54. The axle 49 is rotatably supported by the reducer case 51 through bearings 55 and 56.

The reducer 47 includes the reducer case 51 and a gear 52. The reducer case 51 accommodates the gear 52. The gear 52 transmits the rotation of the output shaft 46 to the axle 49. It should be noted that FIG. 2 illustrates only the gear 52 among a plurality of gears of the reducer 47, while omitting illustration of the rest of the plurality of gears.

The transmission case 48 axially covers the primary pulley 41, the secondary pulley 42, the belt 43, the centrifugal clutch 45, and the output shaft 46.

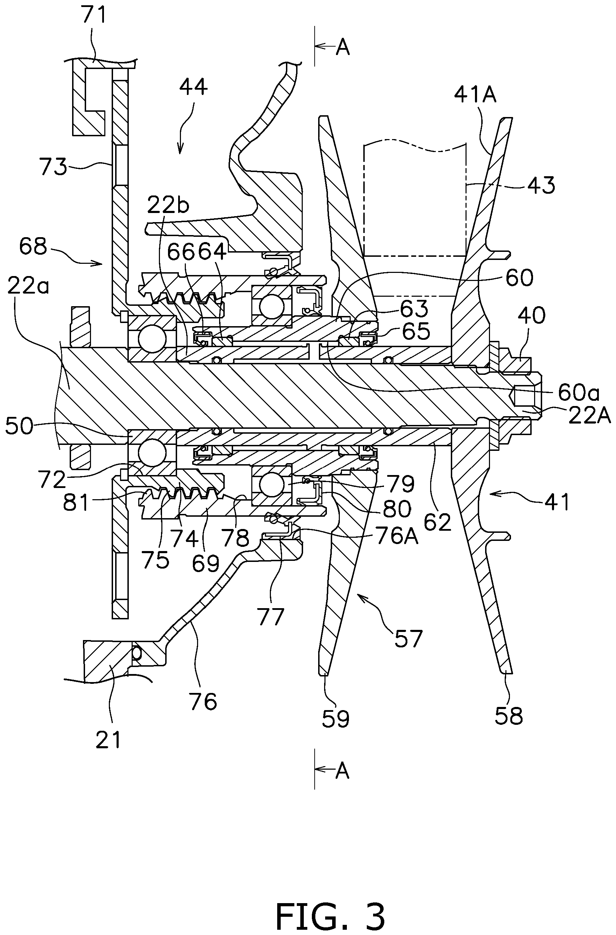

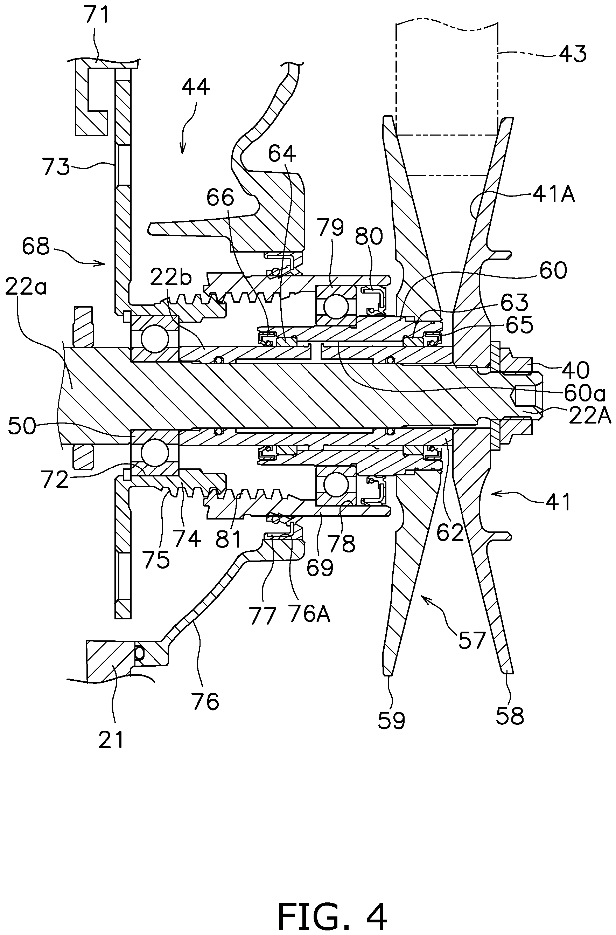

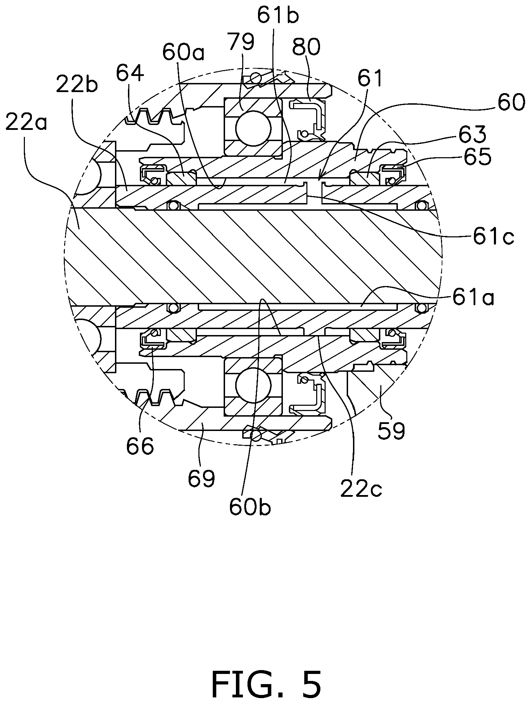

FIGS. 3 and 4 are enlarged views of the primary pulley 41 and the sheave drive mechanism 44. FIG. 5 is an enlarged view of a part in FIG. 3. As shown in FIGS. 3 and 4, the primary pulley 41 includes a first movable sheave 57 (exemplary movable sheave) and a first stationary sheave 58.

The first movable sheave 57 is supported by the crankshaft 22 to be movable in an axial direction of the crankshaft 22 (hereinafter simply referred to as "the axial direction"). The first movable sheave 57 is disposed on the inner side (the left side in FIG. 3) of the first stationary sheave 58 in the axial direction.

The first movable sheave 57 is supported by the crankshaft 22 to be non-rotatable in a circumferential direction of the crankshaft 22. The first movable sheave 57 is attached to the crankshaft 22 with splines. The first movable sheave 57 is rotated unitarily with the crankshaft 22.

The first movable sheave 57 includes a first sheave portion 59 and a first boss portion 60. The first sheave portion 59 is disposed to face the first stationary sheave 58. The first sheave portion 59 is fixed to the outer peripheral surface of the first boss portion 60. The first groove 41A is provided between the first sheave portion 59 and the first stationary sheave 58. The first boss portion 60 axially extends from the first sheave portion 59. As shown in FIG. 5, the first boss portion 60 includes a first boss hole 60a and spline grooves 60b. The first boss hole 60a extends in the axial direction. The crankshaft 22 extends through the first boss hole 60a. The spline grooves 60b are disposed on the inner peripheral surface of the first boss portion 60. The spline grooves 60b are provided in the first boss hole 60a. The spline grooves 60b axially extend along the first boss hole 60a.

The crankshaft 22 includes a first shaft portion 22a, a second shaft portion 22b, and spline teeth 22c. The first shaft portion 22a is rotatably supported by the crankcase 21 through the bearings 28 and 29.

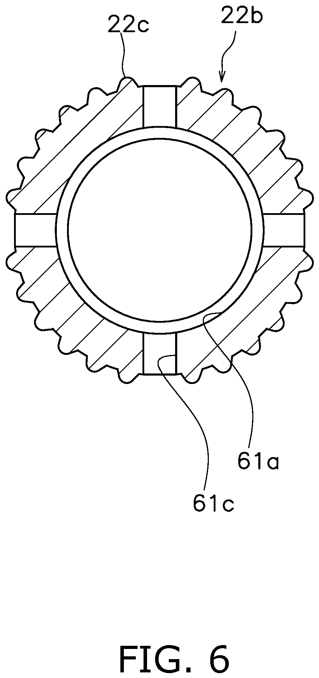

FIG. 6 is a cross-sectional view of the second shaft portion 22b taken along line A-A shown in FIG. 3. The second shaft portion 22b has a tubular shape. The second shaft portion 22b is disposed at the first shaft end 22A on the outer peripheral surface of the first shaft portion 22a. The second shaft portion 22b extends through the first boss hole 60a.

The spline teeth 22c are spline-fitted to the spline grooves 60b. The spline teeth 22c extends in the axial direction. The spline teeth 22c are disposed on the outer peripheral surface of the second shaft portion 22b. As shown in FIG. 6, the spline teeth 22c protrude radially outward on the outer peripheral surface of the second shaft portion 22b. As shown in FIG. 5, the spline teeth 22c are smaller in dimension than the spline grooves 60b in the axial direction. Contrarily speaking, the spline grooves 60b are larger in dimension than the spline teeth 22c in the axial direction. The spline teeth 22c are integrated with the crankshaft 22. In the present preferred embodiment, the spline teeth 22c are integrated with the second shaft portion 22b. The spline teeth 22c and the spline grooves 60b are disposed between a pair of bushings 63 and 64 (to be described).

The first stationary sheave 58 is fixed to the crankshaft 22. The first stationary sheave 58 is fixed to the crankshaft 22 by a nut 40. The first stationary sheave 58 is fixed to the crankshaft 22, while being axially immovable. The first stationary sheave 58 is fixed to the crankshaft 22, while being non-rotatable with respect thereto. The first stationary sheave 58 is rotated unitarily with the crankshaft 22.

The primary pulley 41 includes the pair of bushings 63 and 64. The bushings 63 and 64 are disposed on both ends of the inner peripheral surface of the first boss portion 60. The bushings 63 and 64 are press-fitted into the first boss portion 60. Each bushing 63, 64 is made of a sliding material. DLC coating has been applied to the inner peripheral surface of each bushing 63, 64. The bushings 63 and 64 are disposed between the inner peripheral surface of the first boss hole 60a and the outer peripheral surface of the second shaft portion 22b. When the first movable sheave 57 is axially moved, the bushings 63 and 64 are axially slid against the second shaft portion 22b. A lubricant such as grease is enclosed in between the bushings 63 and 64. The first boss portion 60 and the second shaft portion 22b are sealed therebetween by oil seals 65 and 66.

As shown in FIG. 5, the first boss hole 60a is provided with a lubricant sump 61 for enclosing a lubricant in the interior thereof. The lubricant sump 61 is disposed between the pair of bushings 63 and 64. The lubricant sump 61 includes a first sump portion 61a, a second sump portion 61b, and a plurality of connecting holes 61c.

The first sump portion 61a is disposed between the outer peripheral surface of the first shaft portion 22a and the inner peripheral surface of the second shaft portion 22b. The first sump portion 61a extends in the axial direction. As shown in FIGS. 3 to 5, the first sump portion 61a overlaps with the pair of bushings 63 and 64 when seen in the radial direction of the crankshaft 22. Speaking in detail, the first sump portion 61a overlaps with a sliding range of the bushings 63 and 64 on the second shaft portion 22b in the radial direction of the crankshaft 22.

The second sump portion 61b is disposed between the outer peripheral surface of the second shaft portion 22b and the inner peripheral surface of the first boss portion 60. The second sump portion 61b extends in the axial direction. The second sump portion 61b is larger in dimension than the spline teeth 22c in the axial direction. When seen in the radial direction of the crankshaft 22, the second sump portion 61b overlaps with the first sump portion 61a. The second sump portion 61b is communicated with the first sump portion 61a through the plural connecting holes 61c.

As shown in FIG. 6, the plural connecting holes 61c radially extend about the crankshaft 22 and connect the first and second sump portions 61a and 61b therethrough to each other. The connecting holes 61c are disposed between the bushings 63 and 64. The connecting holes 61c are disposed away from each other at intervals in the circumferential direction of the crankshaft 22. The connecting holes 61c are disposed in alignment with the spline teeth 22c in the circumferential direction of the crankshaft 22. The connecting holes 61c are disposed in adjacent to the spline teeth 22c in the circumferential direction of the crankshaft 22.

The sheave drive mechanism 44 axially moves the first movable sheave 57. As shown in FIG. 2, the sheave drive mechanism 44 includes an electric actuator 67, a first drive member 68, and a second drive member 69.

The electric actuator 67 is, for instance, an electric motor. The electric actuator 67 may be a type of actuator other than the electric motor. The electric actuator 67 includes a rotational shaft 70. The rotational shaft 70 is connected to the first drive member 68 through a gear 71. The rotation of the rotational shaft 70 is transmitted to the first drive member 68 through the gear 71.

As shown in FIGS. 3 and 4, the first drive member 68 includes a first hole 72. The first hole 72 extends to axially penetrate the first drive member 68. The crankshaft 22 is inserted through the first hole 72. The first drive member 68 is supported by the crankshaft 22 through a bearing 50. The first drive member 68 is supported by the crankshaft 22, while being rotatable with respect thereto. The first drive member 68 is supported by the crankshaft 22, while being axially immovable with respect thereto.

The first drive member 68 includes a gear portion 73 and a feed screw portion 74. The gear portion 73 radially extends from the feed screw portion 74 about the crankshaft 22. The gear portion 73 is meshed with the gear 71. The rotation of the rotational shaft 70 of the electric actuator 67 is transmitted to the gear portion 73 through the gear 71. Accordingly, the first drive member 68 is rotated. The feed screw portion 74 axially extends from the gear portion 73. The feed screw portion 74 is provided with a first screw 75 on the outer peripheral surface thereof.

A crankcase cover 76 is attached to the crankcase 21. The crankcase cover 76 includes an opening 76A. The opening 76A is disposed to face the primary pulley 41. The second drive member 69 extends through the opening 76A of the crankcase 21. The second drive member 69 and the crankcase cover 76 are sealed therebetween by an oil seal 77.

The second drive member 69 includes a second hole 78. The second hole 78 extends to axially penetrate the second drive member 69. The crankshaft 22 and the first boss portion 60 extend through the second hole 78.

The second drive member 69 is supported by the first boss portion 60 through a bearing 79. The second drive member 69 is supported by the first boss portion 60, while being rotatable with respect thereto. The second drive member 69 is supported by the first boss portion 60, while being axially immovable with respect thereto. The second drive member 69 is axially moved unitarily with the first movable sheave 57. The second drive member 69 and the first boss portion 60 are sealed therebetween by an oil seal 80. The second drive member 69 is provided with a second screw 81 on the inner peripheral surface thereof. The second screw 81 is meshed with the first screw 75. When the first drive member 68 is rotated, the second drive member 69 is axially moved as shown in FIG. 4. Accordingly, the first movable sheave 57 is axially moved.

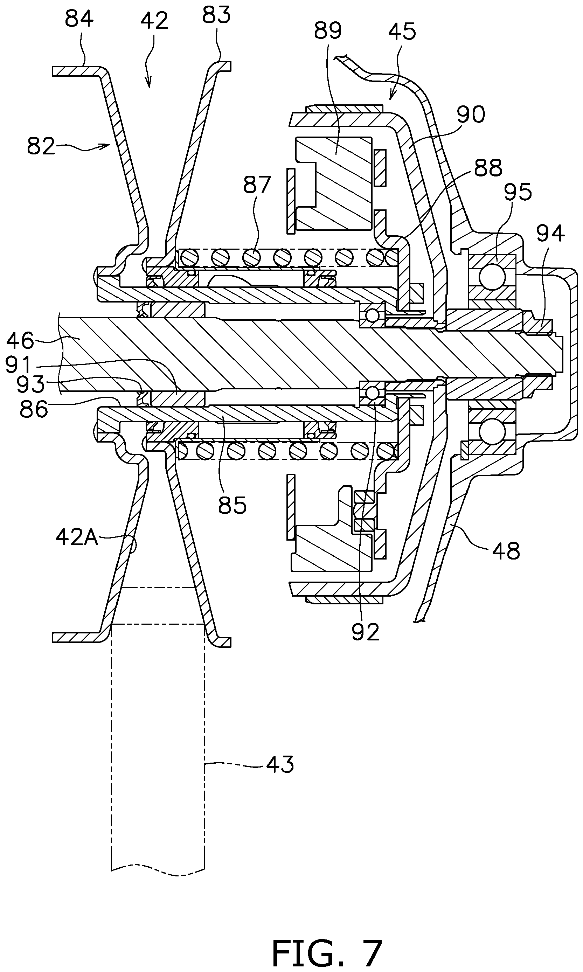

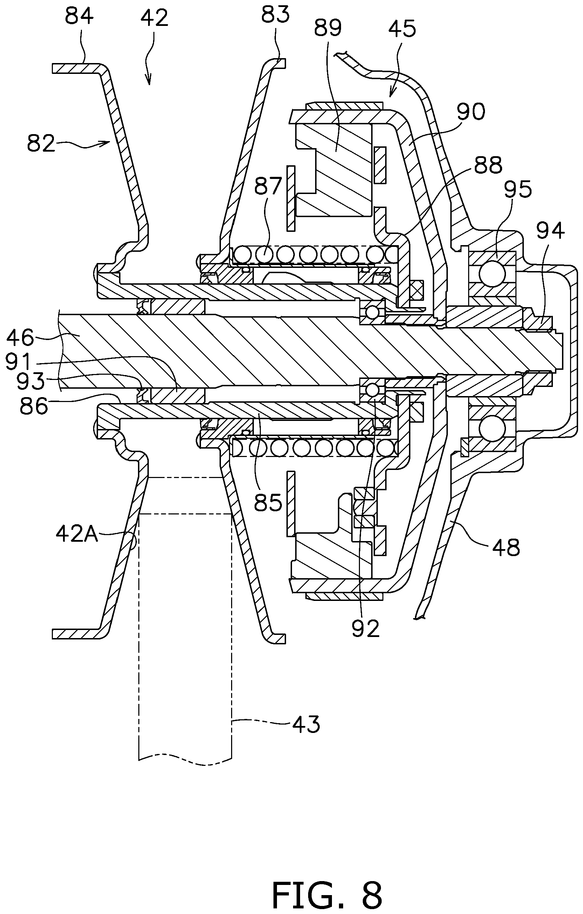

FIGS. 7 and 8 are enlarged views of the secondary pulley 42 and the centrifugal clutch 45. The secondary pulley 42 includes a second stationary sheave 82 and a second movable sheave 83. The second stationary sheave 82 is supported by the output shaft 46, while being rotatable with respect thereto. The second stationary sheave 82 is supported by the output shaft 46, while being axially immovable with respect thereto.

The second stationary sheave 82 includes a second sheave portion 84 and a second boss portion 85. The second sheave portion 84 is disposed to face the second movable sheave 83. The second groove 42A is provided between the second sheave portion 84 and the second movable sheave 83. The second boss portion 85 axially extends from the second sheave portion 84. The second boss portion 85 includes a second boss hole 86. The second boss hole 86 extends to axially penetrate the second boss portion 85.

The output shaft 46 is rotatably supported by the transmission case 48 through a bearing 95. The output shaft 46 extends through the second boss hole 86. A bushing 91 is press-fitted into the second boss hole 86. The bushing 91 is made of a sliding material. The bushing 91 is disposed between the inner peripheral surface of the second boss hole 86 and the outer peripheral surface of the output shaft 46.

The second boss portion 85 is supported by the bushing 91 and a bearing 92, while being rotatable with respect to the output shaft 46. The second boss hole 86 is filled with a lubricant such as grease. The second boss portion 85 and the output shaft 46 are sealed therebetween by an oil seal 93.

The second movable sheave 83 is disposed on the outer side (the right side in FIG. 5) of the second stationary sheave 82 in the axial direction. The second movable sheave 83 is supported by the second boss portion 85, while being non-rotatable thereto. The second movable sheave 83 is rotated unitarily with the second stationary sheave 82. The second movable sheave 83 is supported by the second boss portion 85, while being axially movable with respect thereto. For example, the second movable sheave 83 is attached to the second boss portion 85 with one or more splines. A spring 87 is disposed between the second movable sheave 83 and the centrifugal clutch 45. The spring 87 urges the second movable sheave 83 toward the second stationary sheave 82.

As shown in FIG. 7, when the vehicle velocity is less than a predetermined coupling velocity, the centrifugal clutch 45 is set in a disengaged state that the continuously variable transmission 15 is decoupled from the rear wheel 5. As shown in FIG. 8, when the vehicle velocity is greater than or equal to the coupling velocity, the centrifugal clutch 45 is set in an engaged state that the continuously variable transmission 15 is coupled to the rear wheel 5.

The centrifugal clutch 45 includes a drive plate 88, clutch shoes 89, and a clutch outer 90. The drive plate 88 is fixed to the second boss portion 85. The drive plate 88 is rotated unitarily with the second boss portion 85.

The clutch shoes 89 are connected to the drive plate 88. The clutch shoes 89 are rotated unitarily with the drive plate 88. The clutch shoes 89 are supported by the drive plate 88, while being radially movable with respect thereto. The clutch shoes 89 are urged radially inward by clutch springs (not shown in the drawings).

The clutch outer 90 is fixed to the output shaft 46 by a nut 94. The clutch outer 90 is rotated unitarily with the output shaft 46. The clutch outer 90 radially covers the clutch shoes 89.

When the vehicle velocity is less than the predetermined coupling velocity, the clutch shoes 89 are kept separated from the clutch outer 90 by the urging forces of the clutch springs. Because of this, the centrifugal clutch 45 is set in the disengaged state, whereby the rotation of the secondary pulley 42 is not transmitted to the output shaft 46. When the vehicle velocity is greater than or equal to the coupling velocity, the clutch shoes 89 are moved radially outward by centrifugal forces against the urging forces of the clutch springs. Accordingly, the clutch shoes 89 are contacted to the clutch outer 90, whereby the centrifugal clutch 45 is set in the engaged state. When the centrifugal clutch 45 is set in the engaged state, the rotation of the secondary pulley 42 is transmitted to the output shaft 46 through the drive plate 88, the clutch shoes 89, and the clutch outer 90.

In the continuously variable transmission 15 explained above, when the vehicle velocity is greater than or equal to the coupling velocity, the centrifugal clutch 45 is set in the engaged state. Accordingly, the rotation of the crankshaft 22 is transmitted to the rear wheel 5 through the primary pulley 41, the belt 43, the secondary pulley 42, the centrifugal clutch 45, the output shaft 46, the reducer 47, and the axle 49. This causes the straddled vehicle 1 to travel.

Besides, the first movable sheave 57 is moved by the sheave drive mechanism 44, whereby the gear ratio of the continuously variable transmission 15 is electrically controlled. It should be noted that the gear ratio of the continuously variable transmission 15 means a ratio of the rotational speed of the crankshaft 22 to that of the output shaft 46.

Speaking in detail, when the first drive member 68 is rotated by the electric actuator 67 in a given direction, the second drive member 69 is moved to the outer side in the axial direction as shown in FIG. 4. Accordingly, the first movable sheave 57 is moved together with the second drive member 69 to the outer side in the axial direction. When the first movable sheave 57 is moved to the outer side in the axial direction, the first groove 41A is reduced in width between the first movable sheave 57 and the first stationary sheave 58. Accordingly, the diameter at the wound position of the belt 43 in the primary pulley 41 (hereinafter referred to as "first wound diameter") is increased. When the first wound diameter is increased, the diameter at the wound position of the belt 43 in the secondary pulley 42 (hereinafter referred to as "second wound diameter") is reduced. Accordingly, the gear ratio is reduced. It should be noted that in this case, as shown in FIG. 8, the second movable sheave 83 is moved to the outer side in the axial direction against the urging force of the spring 87, whereby the second groove 42A is increased in width.

When the first drive member 68 is rotated by the electric actuator 67 in the reverse direction to the given direction, the second drive member 69 is moved to the inner side in the axial direction as shown in FIG. 3. Accordingly, the first movable sheave 57 is moved together with the second drive member 69 to the inner side in the axial direction. When the first movable sheave 57 is moved to the inner side in the axial direction, the first groove 41A is increased in width between the first movable sheave 57 and the first stationary sheave 58. Accordingly, the first wound diameter is reduced. When the first wound diameter is reduced, the second wound diameter is increased. Accordingly, the gear ratio is increased. It should be noted that in this case, as shown in FIG. 7, the second movable sheave 83 is moved to the inner side in the axial direction by the urging force of the spring 87, whereby the second groove 42A is reduced in width.

According to the straddled vehicle 1 configured as described above, in the continuously variable transmission 15, an eccentric load acting on the first stationary sheave 58 from the belt 43 can be received by the pair of bushings 63 and 64 disposed on both ends of the inner peripheral surface of the first boss portion 60 of the first stationary sheave 58; hence, enhancement in load endurance performance of the first stationary sheave 58 can be achieved. Besides, the spline grooves 60b are provided on the inner peripheral surface of the first boss portion 60, whereas the spline teeth 22c are provided on the outer peripheral surface of the second shaft portion 22b. Moreover, the spline grooves 60b are larger in dimension than the spline teeth 22c in the axial direction. Therefore, the spline grooves 60b can be overlapped with the sliding range of the bushings 63 and 64 on the second shaft portion 22b in the radial direction of the crankshaft 22. Accordingly, the crankshaft 22 can be inhibited from being increased in dimension in the axial direction.

One preferred embodiment of the present invention has been explained above. However, the present invention is not limited to the preferred embodiment described above, and a variety of changes can be made without departing from the gist of the present invention.

The straddled vehicle 1 is not limited to the scooter, and alternatively, may be a vehicle of another type such as a street type, an off-road type, or a moped type. The configuration of the continuously variable transmission 15 is not limited to that in the preferred embodiment described above and may be changed. The processing for controlling the gear ratio of the continuously variable transmission 15 is not limited to that in the preferred embodiment described above and may be changed.

### REFERENCE SIGNS LIST

1: Straddled vehicle, 15: Continuously variable transmission, 22: Crankshaft, 22c: Spline tooth, 63,64: Pair of bushings, 57: First movable sheave, 60: First boss portion, 60b: Spline groove, 61: Lubricant sump, 61a: First sump portion, 61b: Second sump portion, 61c: Connecting hole

## Claims

1. A continuously variable transmission (15) of an electronically controlled type comprising:
a rotational shaft (22);
a pair of bushings (63, 64) disposed to be slidable with respect to the rotational shaft (22) in an axial direction of the rotational shaft (22); and
a movable sheave (60) including a boss portion (60b) disposed on an outer peripheral surface of each of the pair of bushings (63, 64), the movable sheave (60) being moved in the axial direction with sliding of the pair of bushings (63, 64) in the axial direction, wherein
the pair of bushings (63, 64) being disposed on both ends of an inner peripheral surface of the boss portion (60b).

2. The continuously variable transmission according to claim 1, wherein
the movable sheave (60) includes a spline groove (60b) disposed on the inner peripheral surface of the boss portion (60b),
the rotational shaft (22) includes a spline tooth (22c) spline-fitted to the spline groove (60b), and
the spline groove (60b) has a dimension in the axial direction larger than a dimension of the spline tooth (22c) in the axial direction.

3. The continuously variable transmission according to claim 2, wherein the spline tooth (22c) of the rotational shaft (22) is integrated with the rotational shaft (22).

4. The continuously variable transmission according to claim 1, wherein a lubricant is enclosed in between the pair of bushings (63, 64)

5. The continuously variable transmission according to claim 4, further comprising:
a lubricant sump (61) for enclosing the lubricant, wherein
the rotational shaft (22) includes a first shaft portion (22a) and a second shaft portion (22b) disposed on an outer peripheral surface of the first shaft portion (22a), and
the lubricant sump (61) includes
a first sump portion (61a) disposed between the outer peripheral surface of the first shaft portion (22a) and an inner peripheral surface of the second shaft portion (22b),
a second sump portion (61b) disposed between an outer peripheral surface of the second shaft portion (22b) and the inner peripheral surface of the boss portion (60b), and
a connecting hole (61c) extending in a radial direction of the rotational shaft (22), the connecting hole (61c) connecting the first and second sump portions (61a, 61b) therethrough to each other.

6. The continuously variable transmission according to claim 5, wherein
the second shaft portion (22b) includes a spline tooth (22c) spline-fitted to the inner peripheral surface of the boss portion (60b), and
the connecting hole (61c) of the lubricant sump (61) is disposed in alignment with the spline tooth (22c) in a circumferential direction of the rotational shaft (22).

7. The continuously variable transmission according to claim 6, wherein
the boss portion (60b) of the movable sheave (60) includes a spline groove fitted to the spline tooth (22c), and
the spline groove (60b) has a dimension in the axial direction larger than a dimension of the spline tooth (22c) in the axial direction..

8. A straddled vehicle (1) comprising the continuously variable transmission (15) recited in any one of claims 1 to 6.
